# EUROPEAN PATENT APPLICATION

(11) **EP 2 819 320 A1**
(43) Date of publication of application: **31.12.2014**
(21) Application number: 13305863.6
(22) Date of filing: 24.06.2013
(51) Int. Cl.: H04B 10/07, G02B 6/44, G08B 13/186

(54) **Monitoring opening of the door of an optical fibre cable cabinet**

(71) Applicant: Orange, 75015 Paris (FR)
(72) Inventor: Matyla, Miroslaw, 01-167 Warszawa (PL); Jesionek, Michal, 02-681 Warszawa (PL)
(74) Representative: Orian, Yvette Suzanne

(57) **Abstract**

The opening of the door (D) of a cable-cabinet (10/20) for optical fibers can be monitored by providing in the cabinet an optical network terminal (14/24) connected, via an optical splitter (12/22), to an optical fiber (5,5') that connects to an optical line terminal (2) and by controlling the supply of signals from this optical network terminal (14/24) to the optical line terminal (2) based on the open or closed state of the cabinet door (D). In one configuration the optical network terminal (14/24) becomes powered-up only when the cabinet door (D) is opened, leading the connected optical line terminal (2) to issue a "new terminal" notification of a configuration status update. In another configuration, a powered optical network terminal (14/24) becomes switched off when the cabinet door (D) is opened, causing the connected optical line terminal (2) to issue a notification indicating cessation of transmissions from this network terminal (14/24). In both cases a monitoring module (30) receiving the notifications from the optical line terminal (2) can determine, based on the notifications, that the cable-cabinet door has opened.

## Description

The present invention relates to the field of optical telecommunications networks. More particularly, the invention relates to cable cabinets in optical access networks and, notably, to monitoring when the door of a cable cabinet is opened.

All over the world optical fibers are progressively taking the place of the copper cabling that has traditionally been employed in the access networks used in telecommunications. One of the most common architectures that is employed for optical access networks is a passive optical network (PON). Various standards have been defined for PONs including, but not limited to, GPON (standardized by the International Telecommunication Union, ITU) and EPON (standardized by the institute of Electrical and Electronics Engineers, IEEE). The proportion of a given access network that is purely optical varies, notably according to what variant of FTTx is implemented (e.g. whether the network implements FTTN (fiber to the neighborhood), FTTC (fiber to the curb), FTTH (fiber to the home), and so on).

In a similar way to access networks that use copper cabling, PONs make use of cable cabinets located at different stages in the network infrastructure. Clearly it is desirable to monitor access to the cable cabinets, so that unauthorized access can be detected.

In traditional cable-cabinets for access networks using copper cabling, the copper wires themselves provide power that can be used by a monitoring element installed at the cabinet, and the signaling required to report the result of monitoring can take place over the same wires. However, a purely optical architecture makes use of cable cabinets that contain only passive fiber infrastructure, with no readily available means for providing power or communications functions for a monitoring element.

The present invention has been made in view of the above-mentioned disadvantages.

The present invention provides a cable cabinet for cables containing optical fibers, the cabinet comprising:
a door,
a detector adapted to change state when the door is opened,
a 1-to-N branching unit, where N is 2 or more,
one or more cables, the one or more cables comprising at least one optical fiber having one end connected to the input of the 1-to-N branching unit and the other end configured for connection to an optical line terminal, and
a first optical network terminal connected to one of the N branching-unit outputs,
wherein said state change of the detector is configured to change the transmission state of signals from the first optical network terminal to the optical line terminal, causing said signals to begin being transmitted to the optical line terminal, or to cease being transmitted to the optical line terminal, when door opening is detected by the detector.

When a cable cabinet is equipped with an optical network terminal (ONT) connected to the remote optical line terminal (OLT) in this way, and signals from the optical network terminal to the optical line terminal are started/stopped in response to opening of the cabinet door, a door opening event will change the signals received by the remote optical line terminal. Accordingly, the door-opening event can be detected even when the cable cabinet in question does not contain traditional copper wiring.

It is to be understood that in the present document the expression "optical line terminals" (ONTs) and its variants is used to cover also optical network units (ONUs), unless the context demands otherwise.

According to certain embodiments of the invention, the optical network terminal is arranged to be powered off when the cabinet door is closed and to become powered on when the cabinet door is opened. Applying existing algorithms, the remote optical line terminal reacts when upstream signals from the first optical network terminal begin, and this makes the door-opening event detectible. Moreover, this "normally-off" approach minimizes the power required by the monitoring elements in the cable cabinet.

According to certain other embodiments of the invention, the detector at the cabinet is configured so that the optical network terminal is on when the cabinet door remains closed, and a door-opening event switches the optical network terminal off. The switching off of the optical terminal network breaks the channel between the optical network terminal and the optical line terminal. This may lead to the generation of an alarm at the optical line terminal to indicate that the communication channel with an optical network terminal that is provisioned in the management system of this optical line terminal is broken, making the door-opening event detectible. Moreover, the optical line terminal may generate a signal indicating that an optical network terminal that is provisioned in the management system of this optical line terminal has powered down, again making the door-opening event detectible. When the ONT that ceases transmitting is unprovisioned in the OLT's management system, the OLT still reacts to the cessation of transmissions, this time by clearing a "newONT" alarm. This approach whereby door opening causes signal transmission to cease has the advantage that it enables a door-opening event to be reliably detected even in the case where the person opening the cabinet door proceeds to damage the contents of the cabinet (for example, damaging the optical network terminal).

Some optical cable cabinets already include a 1-to-N branching unit (e.g. an optical splitter) connecting an incoming optical fiber to N outgoing fibers that lead to optical network terminals at subscriber premises, and dividing power approximately equally between the N outputs (a so-called "symmetrical" splitter). Typically this is the case for a cabinet installed within a building as part of an FTTH installation. Certain embodiments of the invention monitor door-opening for cabinets of this type by connecting an optical network unit to one of the N outputs of the branching unit of the cabinet, to serve as the first optical network terminal whose power-on/power-off status is changed by a door-opening event. This makes it possible to monitor the opening of the cable-cabinet door with only minor changes to the existing cabinet structure.

Some PON cable cabinets do not normally contain a branching unit (e.g. they do not have an optical splitter). Certain embodiments of the invention monitor door-opening for cabinets of this type by providing a 1-to-N branching unit in the cabinet as well as providing a dedicated optical network terminal which will be the first optical network terminal whose signals start or stop being supplied to the OLT when a door-opening event occurs. Branching devices such as 1-to-N optical splitters are standard devices that are readily available, and this is also true of optical network terminals. Accordingly, these embodiments of the invention make it possible to monitor optical-fiber cable-cabinet door-opening events without requiring unusual and expensive new hardware.

Certain of the latter embodiments employ a highly asymmetrical 1-to-N branching unit supplying only a relatively low percentage of the incoming optical power to the first optical network terminal in the cabinet, and the majority of the incoming optical power passes downstream to optical network terminals that are available to serve subscribers. An arrangement of this type ensures that the monitoring components do not unduly degrade the quality of the subscriber communications.

In the case where the first optical network terminal is provided specifically for monitoring purposes it is not used for subscriber communications. Accordingly, in certain embodiments of the invention the first optical network terminal is a dummy optical network terminal having reduced functionality compared to a standard device. In particular, the dummy terminal omits the components/programming that are normally required to enable subscriber communications. Thus, the cost and complexity of the first optical network terminal can be reduced.

In some embodiments of the invention the detector used for controlling the supply of signals from the first optical network terminal to the OLT is a single-use device which after the cable-cabinet door has opened cannot change back to its initial, pre-door-opening state. In these embodiments it is necessary to replace the detector device (or a component thereof) after each unauthorized door-opening event. This approach increases the probability that the cable-cabinet will be inspected and repaired after each unauthorized door-opening event and ensures that the cabinet is well maintained.

In certain optical cable-cabinets embodying the invention an inhibitor device is provided that is operable from outside the cable cabinet and the inhibitor device is configured to prevent the transmission-status of signals from the first optical network terminal to the optical line terminal to be changed when the cabinet door opens. Embodiments of this type enable the cable-cabinet door to be opened by authorized personnel (e.g. a maintenance engineer) who possess a key or other activation device that interacts with the inhibitor device.

The present invention further provides an optical-cable-cabinet door-monitoring system comprising a cable-cabinet as described above, the optical line terminal connected to the at least one optical fiber of the cabinet, and a monitoring module. The optical line terminal is configured to detect the appearance or disappearance of signals sent by the first optical network terminal on the optical fiber to which it is connected and to send a detection notification to the monitoring module upon detection of the presence or absence of said signals. The monitoring module is configured to generate an alarm signal, indicative of opening of the door of the cable-cabinet, based on the notifications received from the optical line terminal.

In certain embodiments of optical-cable-cabinet door-monitoring system of the latter type, the first optical network terminal is not provisioned in the management system of the remote optical line terminal to which it is connected and the detection of door opening causes the transmission of signals from the first optical network terminal to the optical line terminal to begin when the cable-cabinet door is opened. Accordingly, when the optical line terminal detects the start of transmissions of management signals by the first optical network terminal it generates a "newONT" alarm and this is detected by the monitoring module.

In certain embodiments of optical-cable-cabinet door-monitoring system according to the invention, the first optical network terminal is provisioned in the management system of the remote optical line terminal to which it is connected and so the optical line terminal monitors the state of the optical network terminal. Because the transmission of signals from the first optical network terminal to the optical line terminal starts up when the cable-cabinet door is opened, the optical line terminal logs in its management system that there has been a change in the offline/online state of the first optical network terminal and this change can be detected by the monitoring module.

The embodiments mentioned in the latter two paragraphs exploit the mechanisms that are already employed by optical line terminals, thus making it possible to monitor cable-cabinet door-opening using only small changes to the network infrastructure (i.e. adding a monitoring module to the management system of the OLT)

In other embodiments of optical-cable-cabinet door-monitoring system according to the invention the first optical network terminal is provisioned in the management system of the remote optical line terminal and the detection of door opening causes transmission of signals from the first optical network terminal to the optical line terminal to cease when the cable-cabinet door is opened. In this case the optical line terminal will have been receiving transmissions from the first optical line terminal and will react to the cessation of transmissions from this unit by producing an alarm that can be detected by the monitoring module. Alternatively or additionally the optical line terminal may receive a "dying gasp" message from the optical network terminal and generate a corresponding alarm notification. Once again, these embodiments exploit existing mechanisms employed by optical line terminals, making it possible to monitor cable-cabinet door-opening using only small changes to the network infrastructure.

In general, optical network terminals have individual assigned serial numbers that they include in signals sent to the remote optical line terminals to which they are connected. In certain embodiments of optical-cable-cabinet door-monitoring systems according to the invention the monitoring module can make use of the serial number to identify which cable-cabinet has just experienced a door-opening event. Alternatively or additionally, if serial numbers become standardized so that specific values or formats are reserved for optical network terminals that are used to monitor door opening, the monitoring module can detect a door opening event simply from the value or format of the serial number included in a notification received from the optical line terminal.

The present invention still further provides a method of monitoring opening of the door of a cable-cabinet in an optical access network. The method comprises the steps of:
detecting opening of the door of the cabinet, and
   responsive to detection of door-opening, changing the transmission state of signals to an optical line terminal from a first optical network terminal in the cable-cabinet, causing said signals to begin being transmitted to the optical line terminal, or to cease being transmitted to the optical line terminal, when door opening is detected by the detector.

The present invention is not limited to application in any one particular type of passive optical network: to the contrary the invention may be applied in PONs according to various industry standards including but not limited to GPON, EPON, GEPON, BPON and APON.

Further features and advantages of embodiments of the present invention will become apparent from the following description of said embodiments, which is given by way of illustration and not limitation, illustrated by the accompanying drawings, in which:
Fig.1 is a diagram illustrating various optical-fiber cable-cabinets embodying the invention, provided in an FTTH PON topology;
Fig.2 is a diagram illustrating the architecture of a first embodiment of optical-fiber cable-cabinet according to the invention;
Fig.3 is a diagram illustrating the architecture of a second embodiment of optical-fiber cable-cabinet according to the invention;
Fig.4 illustrates one example of a switch mechanism that may be employed in an embodiment of the invention according to Fig.2 or Fig.3;
Fig.5 illustrates steps in various monitoring methods according to embodiments of the invention, in which:
Fig. 5A represents an embodiment in which the optical network terminal is switched on when a door-opening event occurs, and
Fig.5B represents an embodiment in which the optical network terminal is switched off when a door-opening event occurs; and
Fig.6 is a diagram illustrating an example of the arrangement of a monitoring module relative to an optical line terminal in an embodiment of the invention.

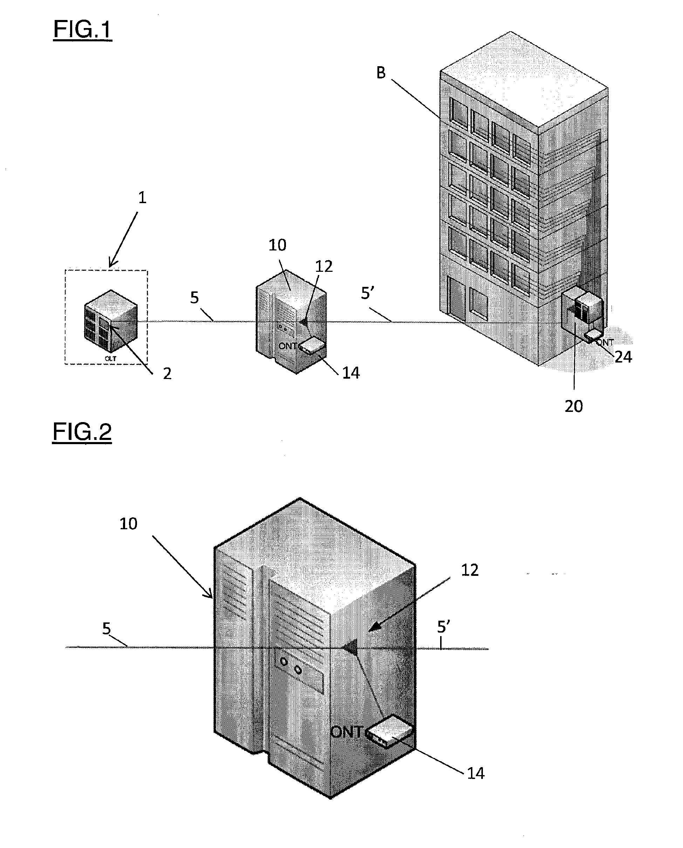

Various embodiments of optical-fiber cable-cabinet according to the invention, and associated monitoring methods and systems, will now be described with reference to Figs.1 to 6.

Fig.1 illustrates an example of an FTTH PON topology using a first and a second embodiment of optical-fiber cable-cabinet according to the invention. The fact that Fig.1 represents a FTTH topology is purely illustrative; the invention can be applied more generally in substantially any FTTx PON topology. Moreover, provided that the cabinet contains optical infrastructure connected to an OLT the invention may be applied, if desired, even in a cable-cabinet that is not a purely passive, or even a purely optical, cabinet.

As illustrated in Fig.1, a central office 1 houses a set of optical line terminals including an optical line terminal 2 that is connected to an optical fiber 5. The optical fiber 5 is bundled with other optical fibers in a cable (not shown) and extends to and through a first cable-cabinet 10 that is provided in the street in the vicinity of a building B. A portion 5' of the optical fiber passes on to a second cable-cabinet 20 that is installed to serve subscribers located within building B.

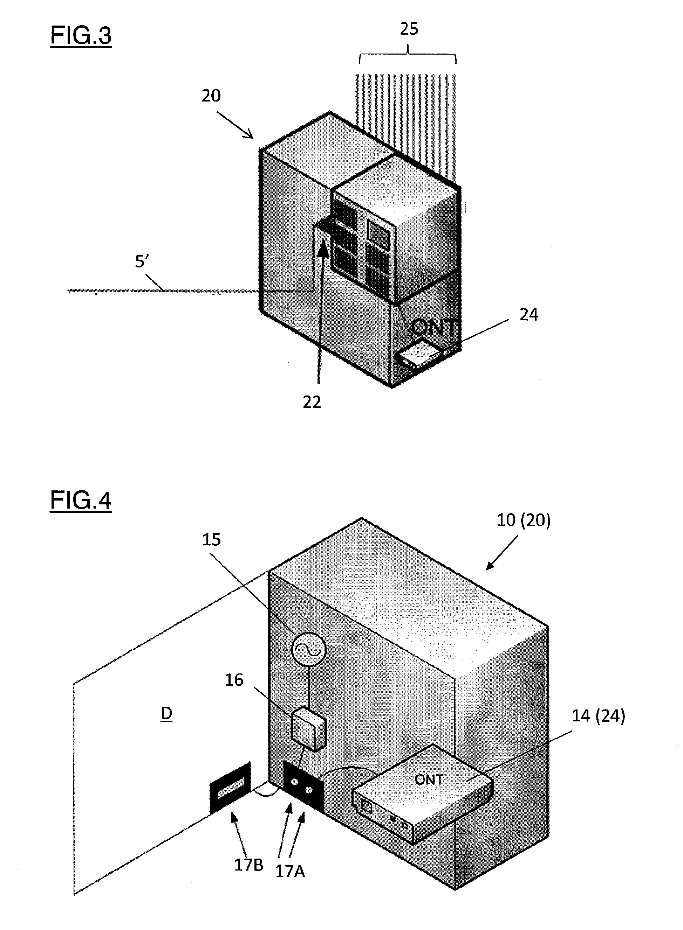

The cable-cabinet 10 corresponds to a first embodiment according to the invention and is illustrated in greater detail in Fig.2. The cable-cabinet 10 has a power supply 15 (shown in Fig.4), an optical network unit 14 and a 1-to-N optical splitter 12 in addition to the components that would usually be present in a passive optical cable-cabinet at this location in an FTTH PON access network. The input of the 1-to-N optical splitter 12 is connected to the optical fiber 5 that is connected to the remote optical line terminal 2 at the central office 1. The 1-to-N optical splitter is a passive optical splitter having a number N of outputs at least equal to 2 one output connects to the optical network terminal 14 and another output connects to the optical fiber portion 5' that passes on to cable cabinet 20).

For convenience, a common commercially-available 1-to-N passive optical splitter such as a 1-to-32 optical splitter may be used as the optical splitter 12, leaving multiple outputs unconnected. Alternatively, the optical splitter 12 may be a highly asymmetrical 1-to-2 optical splitter having one output connected to the optical network terminal 14 and outputting only a small fraction of the input power, and the other output supplying the majority of the input power to the optical cabinet 20. In this way the presence of the optical network terminal 14 for monitoring door-opening will not produce too much of an adverse effect on the service provided to the subscribers in the building B. The fraction of the optical splitter's input power that is fed to the optical network terminal 14 relative to the fraction passed on to the optical cabinet 20 is selected, based on the specific technology (GPON, EPON, etc.), so that the signal level is acceptable at the optical network terminals 24, as well as at the optical network terminal 14. For example, to meet the standards specified by the ITU the power level at the optical network terminals should be - 27dB or better. Typically, the optical network terminal 14 receives of the order of 10% or less of the input power.

The cable-cabinet 20 corresponds to a second embodiment according to the invention and is illustrated in greater detail in Fig.3. The cable-cabinet 20 contains a 1-to-N passive optical splitter 22 that enables a single incoming optical fiber 5' to serve a number N (which, at present, typically is 32 or 64) of subscribers located in the building B, via subscriber lines 25. In general the optical splitter 22 is a symmetrical device designed to split the power from the optical fiber 5' substantially equally between its outputs. According to this second embodiment of cable-cabinet according to the invention, one of the outputs of the splitter 22 is not connected to a subscriber line 25 but instead is connected to an optical network terminal 24 provided at the cabinet and used to enable opening of the cable-cabinet door to be monitored. It will be understood that the optical network terminal 24 that is used for door-opening monitoring is connected, via the optical fiber 5',5, to the optical line terminal 2 at the central office 1.

In the cable-cabinets according to the invention a detector is provided which responds to opening of the cabinet door in a manner which causes the transmission status of signals from the optical network terminal 14, 24 to the optical line terminal to change. This detector may take any convenient form and typically comprise a switch and/or sensor. Depending on the specific embodiment, the change in transmission status of signals from the optical network terminal 14,24 may be a change in the power-on/power-off status of the optical network unit 14/24. Such a change in power-on/power-off status may consist in a switch on of the optical network unit 14, 24 when the cabinet door opens, or a switch-off of the optical network unit (in the case where the default condition of this unit is that it is normally-on). However, according to the present invention it is not essential that the change in the transmission status of signals from the optical network terminal 14,24 to the optical line terminal 2 should be a change in the on/off status of the optical network terminal 14,24. On the contrary, other approaches may be used, for example, selectively blocking and unblocking the signal path between the optical network terminal 14,24 and the optical line terminal at the time of detecting door opening.

Power consumption can be kept low if the detection mechanism (switch, sensor) is arranged to cause a (normally-off) optical network terminal 14, 24 to switch on when the cabinet door opens. However, a configuration of that kind is vulnerable to failure in the case where a vandal opens the cabinet door then proceeds to tear out cables and components from the cabinet very rapidly. In such a case the switch-on of power to the optical network terminal 14,24 when the door opens may be rapidly followed by switch-off as the circuitry becomes damaged, leading to unreliability in detection of door opening. This problem can be avoided if the detection mechanism is arranged to switch off a (normally-on) optical network terminal when the cabinet door opens.

The environment where the cable cabinet is installed may affect the choice of whether to provide a cable-cabinet having a monitoring system that works with the optical network terminal in a normally-on mode or in a normally-off mode. A cable-cabinet may also be configured to have a monitoring system which is configurable so that a choice can be made, for example at the time of installation, of the normally-on or normally-off mode of operation.

The invention is not particularly limited regarding the type of device that can be used as the detector that responds to the opening of the cabinet door. Mechanical switches that are cheap and simple to construct include one in which opening of the cabinet door breaks contact between contact pads of the switch, and one in which door-opening releases a spring which causes contact to be made between contact pads of a switch. However, numerous other devices may be used. For example, an electrical switch may be constructed using a bar magnet that is positioned within a coil of wire when the door is shut and which generates an electric current in the wire as the door is opened, due to relative movement between the bar magnet and the coil. As another example, a light sensor may be positioned at a location where it will detect light when the cabinet door opens, thereby generating an electrical signal that can be used (if necessary in association with other devices and/or circuitry) to control the supply of power to the optical network terminal. As yet another example, a motion sensor may be provided on the door or on the cabinet body at a location where it will detect motion of the door, and the detection signal can control connection or disconnection of power supply to the optical network terminal. Many other devices and arrangements will readily occur to the skilled person.

Fig.4 illustrates an example of one configuration that may be used to change the power-on/power-off status of an optical network terminal 14,24 when the cabinet door D opens. Fig.4 omits various elements that are present in the cable-cabinet, for example it does not show the optical fiber 5 or the optical splitter 12,22.

In this example, the cable cabinet 10,20 has a power supply 15 (illustrated in Fig.4 as an internal power supply) connected to the optical network terminal 14,24 via optional auxiliary electronics components 16 and via a mechanical switch 17. The power supply 15 may take any convenient form and may, for example, include a battery, a photovoltaic cell, an electromechanical power generator, a connection to a power outlet of an electricity distribution network (with backup to maintain power supply to the optical network terminal in the event of a power outage), and so on. PON cable cabinets do not generally have a power supply so the power supply 15 is an element that is added in the cable cabinets 10, 20 according to these embodiments of the invention.

In the example of Fig.4, the mechanical switch 17 has a pair of separated contact pads 17a which, when the door D is closed, are connected to each other electrically by a metal contact strip 17B provided on the door S. Power from power supply 15 is supplied to the optical network terminal 14,24 when the contact pads 17a are electrically connected to each other. Thus, the example of Fig.4 operates in a mode where the optical network terminal 14, 24 is "normally-on", i.e. it is on when the cabinet door D is shut. When the cabinet door D is opened, the bridging contact 17b moves away from the contact pads 17a and the electrical circuit between the contact pads 17a is broken. In the Fig.4 arrangement this causes power supply to the optical network terminal 14, 24 to be interrupted.

The detector mechanism that causes the transmission status of signals from the optical network terminal to change when the cable-cabinet door opens may be configured as a single-use device. In this way a person such as a maintenance engineer is incited to visit the cable-cabinet after a door-opening event has been detected, so that the whole or a part of the detector mechanism can be replaced (or, possibly, repaired or reset), and any damage caused by the door-opening incident can be remedied.

It is inconvenient if the detector mechanism requires replacement even on occasions when the cable-cabinet door has been opened by an authorized person. Moreover, even when the detector mechanism is not a single-use device, it may sometimes be desired to prevent door-opening events from being detected or logged if the door opening was authorized.

Accordingly, in a cable-cabinet according to certain embodiments of the invention an inhibitor device is provided that can be engaged by an authorized person (e.g. a maintenance engineer), using a suitable activating device, to prevent the signal-transmission-status of the optical network terminal from changing when the cabinet door is opened. The structure of the inhibitor mechanism is adapted to the design of the detector mechanism that controls the signal-transmission-status of the optical network terminal and its form is not particularly limited.

In a similar way, the form of the activating device that the maintenance engineer uses to engage the inhibitor device may take any convenient form adapted to the structure of the inhibitor device. Clearly, the activating device should be able to engage the inhibitor device without opening the cable-cabinet door. This can be achieved in various ways, for example by configuring the activating device as a key that is operated in order to engage the inhibitor device at or before the time when the cabinet is unlocked. Another example of an activating device suitable to engage the inhibitor device without opening the cabinet door includes a device that transmits a short-range radio signal modulated by an activation code.

Consideration shall now be given to the method of monitoring unauthorized door-opening events or, at least, the monitoring of door-opening events that occur when any provided inhibitor device is not in operation.

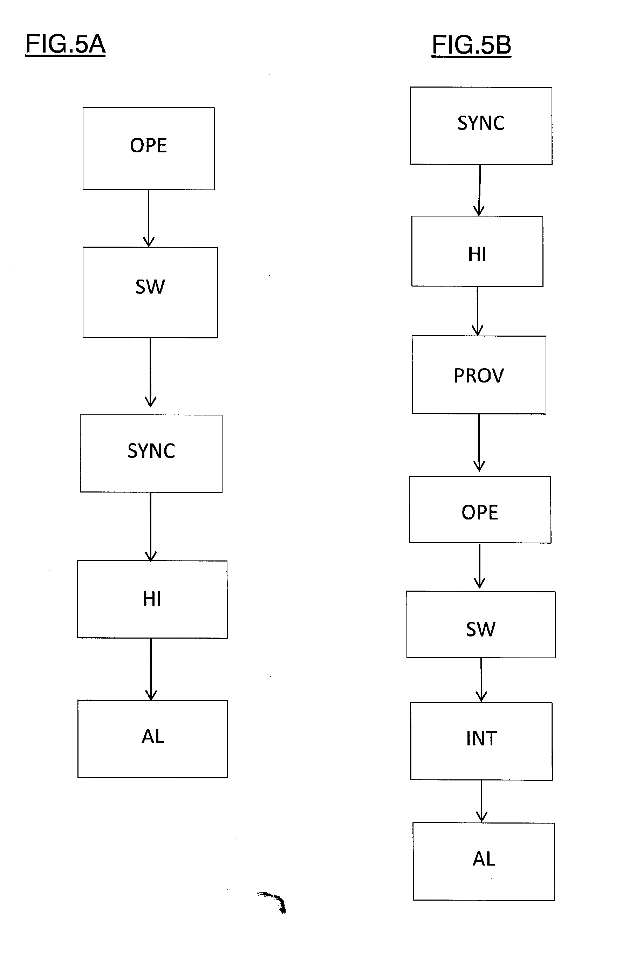

According to various embodiments of the invention, irrespective of whether signals from the optical network terminal 14, 24 are "normally-on" the feeder fiber to the optical line terminal or "normally-off" the fiber, the change in signal-transmission status when a door-opening event occurs can be detected by virtue of the fact that there is a connection between the optical network terminal 14, 24 and the remote optical line terminal 2. The mechanisms underlying this detection shall be explained in greater detail referring to the flow diagrams of Fig.5 in a context where the signal-transmission status is changed by powering-up/powering down the optical network terminal.

Fig.5A is a flow diagram illustrating various events that take place when the door is opened on a cable-cabinet according to an embodiment of the present invention in which an optical network terminal 14, 24 used for monitoring operates in a "normally-off" mode.

In the case of a cable-cabinet according to the present invention the optical network terminal 14, 24 is configured to be off while the cabinet door remains shut, and so no signals are transmitted in the upstream direction from the optical line terminal 14, 24 to the optical line terminal 2 while the cable-cabinet door is closed. When a door-opening event occurs (labeled OPE in Fig.5A) the detector in the cable-cabinet causes a switching of the power-supply status of the optical network terminal (the event labeled SW in Fig.5A). In this case the optical network terminal 14, 24 switches on.

When it switches on, the optical network terminal 14, 24 "listens" to transmissions being made by the optical line terminal 2 on the optical fiber 5 in order to achieve synchronization (labeled SYNC in Fig.5A) and obtain a time slot for making its own transmissions on the optical fiber 5 in the upstream direction (towards the optical line terminal 2) on the OMCI (ONT Management and Control Interface) channel. The optical network terminal 14, 24 then sends a signal (that shall be referred to here as a "hello" message) to the optical line terminal 2 to register the fact that it is on and connected to the optical fiber 5 (this process is labeled HI in Fig.5A).

According to the various standards defining features of PONs, when an optical line terminal receives a "hello" message from an optical network terminal different events can occur depending on whether or not this optical network terminal is provisioned in the management system of that optical line terminal. In the present case, it is presumed that the optical network terminal is not provisioned in the optical line terminal's management system. In view of the fact that the optical network terminal 14, 24 is not provisioned in the management system of the optical line terminal 2, the optical line terminal 2 generates a "newONT" alarm (labeled AL in Fig.5A) when the optical network terminal 14, 24 sends its "hello" message. In the alternative case, where the optical network terminal is provisioned in the management system of the optical line terminal, when the optical network terminal sends its "hello" message the optical network terminal updates the configuration entry for this optical network terminal in its management system to indicate that this provisioned optical network terminal has changed state from offline to online.

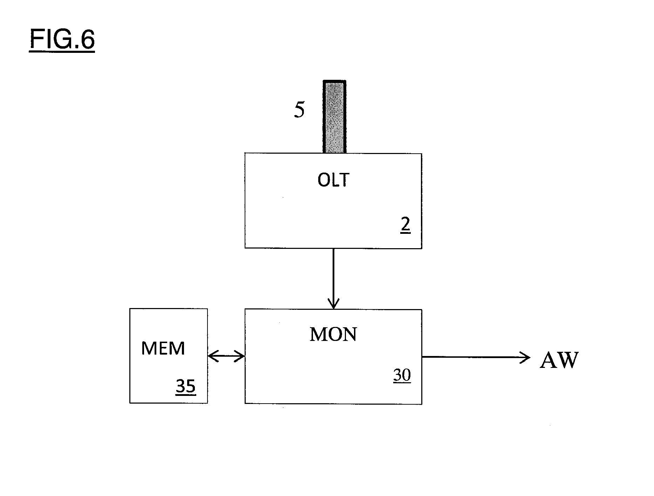

In the scenario of Fig.5A there is a direct correlation between the generation of the "newONT" alarm signal by the optical line terminal 2 (or the offline-to-online status change) and the opening of the cable-cabinet door. Thus, the opening of cable-cabinet doors can be monitored either by not provisioning the optical network terminals 14/24 in the optical line terminal 2 and then monitoring "newONT" alarms generated by the optical line terminal 2, or by provisioning the optical network terminals 14/24 in the management system of the optical line terminal 2 and monitoring the occurrences of offline-to-online status changes. The monitoring process is described in greater detail below, with reference to Fig.6.

Fig.5B is a flow diagram illustrating various events that take place when the door is opened on a cable-cabinet according to an embodiment of the present invention in which the optical network terminal 14, 24 used for monitoring door-opening operates in a normally-on mode.

According to the example of Fig.5B, the optical network terminal 14, 24 is on while the cable-cabinet door remains closed. Accordingly, at some point during installation of the cable-cabinet the optical network terminal 14, 24 is first switched on, synchronizes with the optical line terminal 2, sends a "hello" message thereto and becomes provisioned on the management system of the optical line terminal 2. These preliminary steps are indicated by the steps SYNC, HI and PROV in Fig.5B.

Subsequent to the stage PROV, when the cable-cabinet door is opened (OPE in Fig.5B) the power status of the optical network terminal is switched (step SW in Fig.5B), which in this case entails switching off the optical network terminal 14, 24.

According to various PON standards, control messages are sent bidirectionally on a control channel between optical network terminals and the connected optical line terminal on whose management system they are provisioned. The optical line terminals are configured to monitor reception of control messages from the optical network terminals provisioned on their management systems. In the example according to Fig.5B, the optical network terminal 14, 24 stops sending control messages when it becomes powered down. The optical line terminal 2 detects the interruption in the control messages coming from the optical network terminal 14, 24. According to standard optical line terminal behavior, this causes the optical line terminal to generate a notification or alarm indicating that the control channel between itself and the optical network terminal 14, 24 is broken.

In a case where the optical network terminal 14, 24 is configured to emit a so-called "dying gasp" message when a power outage occurs, the optical line terminal 2 may be configured to discriminate the dying gasp message and to generate a notification indicating that a channel break has occurred due to power going off at the optical network terminal 14, 24. The steps INT and AL in Fig.5B correspond, respectively, to the detection of the channel break/dying gasp message by the optical line terminal and the generation of the corresponding notification.

In the scenario according to Fig.5B there is a direct correlation between the generation of the "broken channel" or "ONT power off" alarm signal by the optical line terminal 2 and the opening of the cable-cabinet door. Thus, the opening of cable-cabinet doors can be monitored by monitoring "broken channel" or "ONT power off" notifications generated by the optical line terminal 2.

Figs.5A and 5B illustrate cases where the optical line terminal detects the appearance or disappearance of signals from the optical network terminal in the case where the signal appearance-disappearance is caused by the optical network terminal switching on or switching off. However, it will be understood that the same principles apply even when a different mechanism (e.g. blocking/unblocking the signal path) is employed to produce a change in the signal transmission status to the optical line terminal.

The functions of listening, synchronization and registration mentioned above in relation to Figs.5A and 5B are basic functions that optical network terminals generally perform to enable proper management of messages on an optical fiber 5 in a PON (in view of the fact that multiple optical network terminals may send messages on the same fiber). In the context of the present invention these are the only functions that need to be performed by the optical network terminal 14, 24 that serves in monitoring door-opening. More especially, these particular optical network terminals 14, 24 are not going to be used to enable subscriber communications and so it is not essential for them to have the functionality required for handling subscriber communications (e.g. a user interface, data processing/switching functionality, and so on). In other words, these optical network terminals 14, 24 may be configured as so-called "dummy terminals" having only basic listening, synchronization and registration functions (notably, functions for interfacing with the upstream components of the PON) but lacking functions associated with providing subscribers with communications. The use of dummy terminals reduces the cost of the equipment used to monitor door opening.

It will be understood that no new functionality has been required from the optical line terminal 2 in order for it to produce the "newONT" alarm signal, or configuration status update notification, when the cabinet door opened at the cable-cabinet in the case illustrated in Fig.5A, or for it to produce the "broken channel" or "ONT switched off" signal when the cabinet door opened at the cable-cabinet in the case illustrated in Fig.5B. However, in order for these notifications to be properly interpreted as an indication of a door-opening event some additional functionality is needed. If desired, this new functionality can be integrated into the optical line terminal 2 by providing it with an internal monitoring module. However, it is less complex and less costly to provide this new functionality in a monitoring module that is external to the optical line terminal 2 and processes notifications generated by the optical line terminal 2.

Fig.6 is a diagram illustrating an embodiment of the invention in which a monitoring module 30 is provided and arranged to receive at least some of the notifications generated by the optical line terminal 2. This monitoring module 30 may be provided in the form of functionality in the management system of the optical line terminal 2. The monitoring module 30 and optical line terminal 2 may be local to one another, or remote but in communication. The monitoring module 30 may be used in common to monitor notifications issued by plural optical line terminals 2, so as to monitor door opening over a larger number of cable cabinets.

As illustrated in Fig.6, the monitoring module 30 is configured to receive at least certain of the notifications that the optical line terminal 2 generates. For example, if the cable-cabinets connected to the optical line terminal 2 only include ones being monitored using optical network terminals 14, 24 that operate in the normally-off mode then the monitoring module 30 may be configured to receive at least the "new terminal" notifications generated by the optical line terminal 2 (when the optical network terminal is unprovisioned in the optical line terminal's management system), or may be configured to determine when the optical line terminal has noticed a change in the status of the optical network terminal (when the optical network terminal is provisioned in the management system of the optical line terminal). In a similar way, if the cable-cabinets connected to the optical line terminal 2 only include cabinets being monitored using optical network terminals 14, 24 that operate in the normally-on mode then the monitoring module 30 may be configured to receive at least the "ONT power off" and/or "channel break" notifications generated by the optical line terminal 2. If the cable-cabinets connected to the optical line terminal 2 may include some optical network terminals 14, 24 that operate in the normally-off mode and some that operate in the normally-on mode then the monitoring module 30 may be configured to receive all of these kinds of notifications generated by the optical line terminal 2.

In the embodiment illustrated in Fig.6, the monitoring module 30 is arranged to be able to read from and write to a memory 35. In this example the memory 35 stores rules enabling the monitoring module 30 to differentiate between occasions when a "newONT" notification or a configuration status update generated by the optical line terminal 2 corresponds to a door-opening event and occasions when these notifications/updates are conventional ones relating to connection or activation of a terminal on the optical fiber, as well as rules enabling the monitoring module 30 to differentiate between occasions when notifications generated by the optical line terminal 2 responsive to the disappearance of signals from the optical network terminal 14/24 correspond to a door-opening event and occasions when these notifications relate to conventional cases of broken channels or power outages.

The present invention is not particularly limited regarding the nature of the rules that the monitoring module can use to make these determinations. One simple approach is based on serial numbers of optical network terminals. According to the various PON standards, a serial number that serves as a unique identifier is assigned to each optical network terminal, and optical network terminals are configured to include their serial numbers in management/control channel messages they send to their connected optical line terminal. The monitoring module 30 may be provided with details of the serial numbers of optical network terminals 14, 24 that are used for monitoring door-opening events (for example the serial numbers may be stored in memory 35 by pre-programming, with any suitable updating mechanisms). When an appropriate notification is received from the optical line terminal the monitoring module 30 may check the serial number included in the notification (and, potentially, the type of the notification) in order to determine whether the affected optical network terminal is one that monitors cabinet-door opening and, thus, to determine if the notification corresponds to a door-opening event.

In the future the serial numbers of optical network terminals may become standardized in such a way that serial numbers having a specified format or value will be reserved for optical network terminals that are employed to monitor cable-cabinet door opening. In such a case the monitoring module 30 can determine that a given notification relates to a door-opening event by recognizing that the serial number of the optical network terminal that is the object of the notification is a serial number having the specified format or value.

It is helpful for the monitoring module to be able to identify which cable cabinet is affected by the detected door-opening event. In certain embodiments this is achieved by storing not only an indication of which serial numbers correspond to optical network terminals that are used for monitoring door-opening but also an indication of the relationship between serial numbers and cable cabinets.

According to the application, the monitoring module 30 may be configured so that when it discriminates the occurrence of a door-opening event it produces an alarm output or notification AW of a specific kind. For example, it may be desired to generate an alarm signal that will draw the attention of a human supervisor when a door-opening event occurs (or when such an event affects a particular cable cabinet). In such a case the output alarm AW from the monitoring module may trigger production of an alarm sound, a visual signal or the like. As another example, it may be desired to produce an alarm output AW that is recorded as an incident report, perhaps forming part of a log of door-opening incidents. Other forms for and uses of the alarm signal will readily occur to the skilled person.

Although the invention has been described with reference to certain specific embodiments it is to be understood that various modifications and improvements can be made without departing from the scope of the invention as defined in the appended claims.

For example, the embodiment described in relation to Fig.6 employs a monitoring module 30 which may discriminate door-opening events based on rules stored in a memory 35. The skilled person will readily understand that the appropriate rules can be stored in the monitoring module itself or implemented by virtue of the structure of the monitoring module.

As another example, although the illustrated embodiments show cable-cabinets including a single optical network terminal 14, 24 involved in monitoring door opening, the skilled person will readily understand that if desired two or even more optical network terminals may be provided in the cabinets and configured to monitor door opening, notably to improve reliability.

## Claims

1. A cable cabinet (10/20) for cables containing optical fibers, the cabinet comprising:
a door (D),
a detector (17) adapted to change state when the door is opened,
a 1-to-N branching unit, where N is greater than 1,
one or more cables, said one or more cables comprising at least one optical fiber having one end connected to the input of the 1 to N branching unit and the other end configured for connection to an optical line terminal, and
a first optical network terminal connected to one of the N branching-unit outputs,
wherein said state change of the detector (17) is configured to change the transmission state of signals from the first optical network terminal (10/20) to the optical line terminal (2), causing said signals to begin being transmitted to the optical line terminal (2), or to cease being transmitted to the optical line terminal (2), when door opening is detected by the detector (17).

2. The cable cabinet (10/20) according to claim 1, comprising a power supply (15), wherein the detector (17) and power supply unit (15) are arranged to discontinue power supply to the first optical network terminal (14/24) when the detector (17) changes state on opening of the cabinet door (D).

3. The cable cabinet (10/20) according to claim 1, comprising a power supply (15), wherein the detector (17) and power supply unit (15) are arranged to switch on power supply to the first optical network terminal (14/24) when the detector (17) changes state on opening of the cabinet door (D).

4. The cable cabinet (200) according to claim 1, wherein the branching unit (22) is a symmetrical branching unit and the N-1 outputs of the branching unit that are not connected to the first optical network terminal (24) are connected to respective subscriber lines.

5. The cable cabinet (10) according to claim 1, 2 or 3, wherein the branching unit (12) is asymmetrical and is adapted to supply the majority of the optical power at the branching-unit input to the branching-unit output(s) that is(are) not connected to the first optical network terminal (14).

6. The cable cabinet (10/20) according to claim 5, wherein the first optical network terminal (14/24) is a dummy terminal incapable of enabling subscriber communications.

7. The cable cabinet (10/20) according to any previous claim, wherein the detector (17) is a single-use device configured to change from an initial state to a second state when the cabinet door (D) is opened and configured to prevent a change back to the initial state from the second state.

8. The cable cabinet (10/20) according to any previous claim, and further comprising an inhibitor device operable from outside the cable cabinet (10/20), the inhibitor device being configured, when engaged, to prevent the transmission state of signals from the first optical network terminal (14/24) to the optical line terminal (2) from being changed when the cabinet door opens.

9. Optical-cable-cabinet door-monitoring system comprising:
a cable-cabinet (10/20) according to any one of claims 1 to 8,
said optical line terminal (2) connected to said at least one optical fiber of the cabinet, and
a monitoring module (30),
wherein the optical line terminal (2) is configured to detect the appearance or disappearance of signals sent by the first optical network terminal (14/24) on said at least one optical fiber (5,5') and to send a detection notification to the monitoring module (30) upon detection of the appearance or disappearance of said signals, and
the monitoring module (30) is configured to generate an alarm signal (AW), indicative of opening of the door of the cable-cabinet, based on the notifications received from the optical line terminal (2).

10. The optical-cable-cabinet door-monitoring system according to claim 9, wherein the first optical network terminal is not provisioned in the optical line terminal and the optical line terminal (2) is configured, upon detecting the start of signal transmissions from said first optical network terminal on the at least one optical fiber, to send the monitoring module a detection notification indicating that a new optical network terminal has begun transmitting.

11. The optical-cable-cabinet door-monitoring system according to claim 9, wherein the first optical network terminal is provisioned in a management system associated with the optical line terminal, the optical line terminal (2) is configured, upon detecting the start of signal transmissions from said first optical network terminal on the at least one optical fiber, to register in the management system a change in state of the first optical network terminal (10/20), and the monitoring module is configured to detect that said state change has been registered by the optical line terminal.

12. The optical-cable-cabinet door-monitoring system according to claim 9, wherein the optical line terminal (2) is configured, upon detecting interruption of signals from the first optical network terminal (14/24) on said at least one optical fiber (5), to send the monitoring module (30) a detection notification indicative of cessation of transmissions by the first optical network terminal (14/24).

13. The optical-cable-cabinet door-monitoring system according to any one of claims 9 to 12, wherein:
the optical line terminal (2) is configured to include a serial number identifying the first optical network terminal (14/24), in a detection notification sent to the monitoring module (30) upon detection of the appearance or disappearance of signals from said first optical network terminal (14/24), and
the monitoring module (30) is configured to generate, and include in the alarm signal (AW), an identifier of the optical-cable-cabinet (10/20) whose door has opened, the identifier being produced based on the serial number included in the detection notification received from the optical line terminal (2).

14. A method of monitoring opening of a door of a cable-cabinet (10/20) in an optical access network, the method comprising the steps of:
detecting opening of the door (D) of the cable-cabinet (10/20), and
responsive to detection of door-opening, changing the transmission state of signals to a remote optical line terminal (2) from a first optical network terminal (14/24) in the cable-cabinet (10/20), causing said signals to begin being transmitted to the optical line terminal (2), or to cease being transmitted to the optical line terminal (2), when door opening is detected.

15. A method of monitoring opening of the door of a cable-cabinet (10/20) in an optical access network, according to claim 13, wherein the changing step comprises powering off the first optical network terminal (14/24) responsive to detection of the opening of the door (D) of the cable cabinet (10/20).
